# EUROPEAN PATENT SPECIFICATION

(11) **EP 4 348 536 B1**
(45) Date of publication and mention of the grant of the patent: **06.05.2026**
(21) Application number: 22737753.8
(22) Date of filing: 25.05.2022
(51) Int. Cl.: G06Q 10/06

(54) **SYSTEM FOR HARNESSING KNOWLEDGE AND EXPERTISE TO IMPROVE MACHINE LEARNING**
SYSTEM ZUR NUTZUNG VON WISSEN UND ERFAHRUNG ZUR VERBESSERUNG DES MASCHINELLEN LERNENS
SYSTÈME D'EXPLOITATION DES CONNAISSANCES ET DE L'EXPERTISE POUR AMÉLIORER L'APPRENTISSAGE MACHINE

(30) Priority: 03.06.2021 US 202117338056
(43) Date of publication of application: 10.04.2024
(73) Proprietor: Truata Limited, Sandyford, Dublin 18 D18 A7K7 (IE)
(72) Inventor: FAGAN, David, Dublin 18, D18 A7K7 (IE); COYLE, Maurice, Dublin 18, D18 A7K7 (IE); FENTON, Michael, Dublin 18, D18 A7K7 (IE); SMYTH, Barry, Dublin 18, D18 A7K7 (IE)
(74) Representative: Barker Brettell LLP
(86) International application number: PCT/EP2022/064276
(87) International publication number: WO 2022/253682

(56) References cited:
- US-A1- 2018 165 604
- US-A1- 2020 411 199
- US-B2- 10 509 672

## Description

### FIELD OF INVENTION

The present invention is directed to machine learning, and more particularly, for providing a system and method for harnessing human knowledge and expertise to improve machine learning processes.

### BACKGROUND

When building workflows to train, test and validate machine learning models, the vast array of available techniques and configuration options at each stage of the process can be very difficult to navigate. These challenges require, or benefit from, a large amount of expertise to make the right decisions and to understand their inner workings and effects. In automated or guided machine learning systems, the use of brute-force techniques via automatic selection of techniques and configurations falls short in accounting for the creativity, subtleties, and nuances provided by human intuition and expertise. Furthermore, some systems benefit from the scientific method that allow users of the system to iterate and improve the models in order to achieve better performance, more reliable results, and improve levels of trust and confidence in the outcomes produced. US Patent Application No. 2018/165604A1 titled "SYSTEMS AND METHODS FOR AUTOMATING DATA SCIENCE MACHINE LEARNING ANALYTICAL WORKFLOWS" discloses systems and methods for automating data science machine learning using analytical workflows that provide for user interaction and iterative analysis US 10509672 B2 refers to a system for establishing and maintaining a standardize and interoperable resource information assertion environment. US 2020/411199 Al relates to platforms, systems media and methods for capturing clinical cases and expert-derived treatment rationales to facilitate biomedical decision making.

Generally, brute-force approaches to automated machine learning processes fail to include user intuition or expertise in the process. They also do not allow domain knowledge to be applied to the machine learning process. Each execution of a machine learning process is one-size-fits-all, i.e., these systems do not adapt to specific problem characteristics or learn as time goes on. Generally, these systems remove the "science" from "data science," making it more difficult to understand the configurations that have been and will be selected and run experiments to uncover fresh insights and improve performance. Therefore, a clear need exists in delivering optimal machine learning performance in automatic or guided machine learning systems as well as in machine learning systems generally.

### SUMMARY

As data science and machine learning explodes in popularity, organizations are struggling to meet demand with skilled resources, and thus their data-driven growth is impeded. Novice data scientists greatly benefit when they can learn by observing more senior data scientists build machine workflows to train, test, validate, evaluate, and deploy machine learning models. Thus, there is a need to more efficiently harness this expertise and use it to accelerate the education of data scientists.

A system and method of harnessing knowledge and expertise to improve machine learning is disclosed. The system and method include capturing the data to input, preparing the captured data, enhancing the prepared data, modeling and learning the process associated with the enhanced data, reviewing the result of the learning and modeling to produce an output, visualizing the reviewed output, and input and recommendations from recommendations engine that make recommendations of techniques and configurations to use. The preparation of the data includes pre-processing, cleaning, and validating the input data. The preparation of the data includes at least one of exploring the data to identify outliers, missing values and other statistical characteristics, dealing with missing values, handling outliers, removing duplicate rows, initial validation and filtering. Enhancing the prepared data includes resolving class imbalance via under-sampling or over-sampling techniques, appropriate scaling and normalization of the data, and feature engineering to produce more representative and useful features. The learn/model process comprises defining a prediction task, selecting appropriate features to use, choosing a suitable algorithm and evaluation metric, tuning hyperparameters, and generating training/test/validation datasets. The review of the result of the learning and modeling involves at least one of scoring trained models, generating evaluation metrics, and determining appropriate statistical tests of significance for robust hypothesis testing. Visualization includes creation of graphical depictions of the evaluation results for analysis and decision-making. The recommendations engine includes a plurality of software-based recommenders that make recommendations about which techniques and configurations to use at each stage of the workflow. The recommendations engine comprises at least one of a multipurpose recommender and a plurality of specialized tuned recommenders. The recommendations engine enforces corporate wide standards and best practices. The recommendations engine comprises providing data cleansing steps. The recommendations engine learns from implicit and explicit input knowledge to continuously improve the quality of the recommendations and machine learning outcomes over time. The recommendations engine includes at least one of a data enhancement recommender, a problem definition recommender, a modeling practices recommender, and a visualization recommender.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
Figure 1 is a system diagram of an example of a computing environment in communication with a network;
Figure 2 is a block diagram of an example device in which one or more features of the disclosure can be implemented;
Figure 3 illustrates a graphical depiction of an artificial intelligence - machine learning system incorporating the example device of Figure 2;
Figure 4 illustrates an exemplary workflow of the present system and method;
Figure 5 illustrates the elements of the user of Figure 4 and the knowledge and expertise designed to improve the processes in conjunction with the users of Figure 4;
Figure 6 illustrates the case-based reasoning cycle used to improve the processes as described herein; and
Figure 7 illustrates an example of a feature selection for a recommendation of the next action in the process;

### DETAILED DESCRIPTION OF THE EMBODIMENTS

The present system and method optimize machine learning workflow/pipeline creation. Harnessing the expertise and knowledge of other users provides a benefit in these environments and enables a flattening of the learning curve.

The present system and method utilize general knowledge of a domain in which a problem is being solved, and associations and relationships generally within the domain. In addition, the present system and method utilize specific knowledge, learned or defined rules, and previously experienced problems and solutions, referred to herein as cases and/or instances. That is, the present system and method utilize a similar or parallel past case, and reuse or apply the past case to the new problem.

The present system and method may be implemented as a software program that harnesses the knowledge and expertise of the users of a machine learning system to improve the performance or predictive accuracy of the system and to educate its users. Users may be defined as human users, computer users, experts, data scientists, and the like. At each stage of a machine learning process, there is a multitude of decisions to be made regarding what analyses to perform, what actions to transform, cleanse, or prepare the data should be taken, what algorithm to apply, what evaluation metric to use, and the like. Each of these decisions may result in vastly different outcomes in terms of accuracy, performance, applicability, maintainability, and scientific validity or robustness of the resulting trained model.

The landscape of user aids in computing ranges from very simple to extremely sophisticated and autonomous systems. Basic aids such as syntax highlighting can be combined with more sophisticated techniques such as autocompletion where a program in use knows the language and vocabulary being typed and suggests completion of words/code/commands as words are being typed. More intelligent user aids incorporate semantic or context aware auto-completion, where the system can recognize the language being used and what it is being used for, to suggest completion of typed text or make more intelligent decisions based on other documents or programs that are currently in use and other sensed contextual signals such as including the weather, temperature or activity levels. The present system and method utilize such features across these levels of complexity and presents additional levels of complexity on this spectrum. The present system and method are aware of the context of a machine learning task to make intelligent recommendations by leveraging several knowledge bases gathered implicitly and explicitly from a population of users. In one configuration, the system and method operate in a fully autonomous mode with a problem definition created and the system and method search and evaluate solutions before returning to the user with the best-performing solution. In another configuration, the system and method operate in an interactive mode, presenting the user at each stage with a set of recommendations for actions that may be taken, based on the previous actions of other users of the system under similar circumstances.

A combination of subject-matter expertise and domain knowledge can improve the decision-making process, and as users develop their expertise, the ability of users to make optimal decisions improves. The system and method as described harness domain, subject-matter, and background knowledge to make intelligent recommendations at each stage of the data science process. The system and method may use a recommendation approach that learns from experience to harness the knowledge and expertise of users who have faced similar decisions under similar (or identical) circumstances while using the system.

The system and method enable users to optimize machine learning performance by learning from past experiences - each time a machine learning pipeline is built, the outcomes are recorded, and the user reputation system is updated to contribute to the system learning more about what decisions were made to make more effective recommendations. In short, some of the same evaluation metrics that are used to evaluate the outcome produced by a pipeline can be used to determine user reputation. For example, if data scientist A performed a classification task and achieved an evaluation F-score of 0.9, while data scientist B achieved an F-score of 0.5 on the same task, A's reputation score for this type of task may increase by a greater amount than B's. When data scientist C is performing a similar classification task at a later date, A's historical actions may be recommended above B's due to their higher reputation score for that kind of task or usage context. The system and method allow for domain knowledge (e.g., knowledge about particular verticals, data types, or use cases) and background knowledge (i.e., best practices for machine learning - e.g., which metrics to use with an imbalanced dataset) to be encoded and updated as a further source for recommendations. In the above example, a domain expert might know that it is more important to identify as many positive examples as possible than it is to ensure all classifications are correct. Thus, a weighted F-score may be appropriate to deliver an optimal result. Background knowledge also leads to more effective decisions, such as choosing F-score as the evaluation metric where the classes are imbalanced in the dataset.

The system and method result in improved machine learning performance and increases understanding and education of users by, in one embodiment: harnessing user expertise and experience to make automatic recommendations regarding the best decisions to make at each stage of a machine learning process; creating a formal description of each stage and/or a standardized description of each stage, such as a case-based representation of each stage and decision within a machine learning process; using a distance metric to measure the similarity between cases; implementing a reputation model that measures the ability of users of the system and method to make optimal decisions in different circumstances and use these reputation scores to rank recommended actions; and an explanation engine that educates the user on the recommendations it makes so that both the system and users learn as the system is used.

The system and method build a model of reputation for previous users and use the model to weight the contributions of each previous user when making recommendations. The system and method may be interactive (receiving input), providing the current user with choices or recommendations at each stage of the process and/or may be run in fully automatic mode, selecting the top recommendation(s) at each step and producing final outputs for review. The system and method may provide explanations behind each decision to enable the current user not just to benefit from the experience and expertise of other users, but to educate users as to the best decisions to make at each stage. This results in improved outcomes of the machine learning process, and also educates the user so that the expertise of both user and system improves over time.

The system and method have far-reaching benefits across a number of user groups and usage scenarios. In education and training, novice users benefit greatly from understanding the actions that experienced users have taken in the past to allow these novices to rapidly begin to deliver high quality, generalizable outputs. In cross-domain usage, users, such as business intelligence analysts or professionals in quantitative, commercial and financial functions, may benefit from access to easy-to-use machine learning systems that include intuitive interfaces allowing the untrained user to harness the immense power and potential of advancements in machine learning and artificial intelligence. In employee onboarding, the present system and method may convey organizational best practices and success factors allowing new employees to begin delivering value to an organization. By harnessing the collective expertise and knowledge of all users, the present system and method enables new employees to rapidly learn how to be productive in their role. As senior or expert machine learning practitioners within an organization use the present system, their expertise and knowledge is retained by the system even if they leave the company, preventing "brain drain". In online communities of practice, users within different industries and verticals may use the system and method to share techniques and models that have delivered good results. Unskilled business owners in retail with limited technical abilities may use machine learning to drive their business forward.

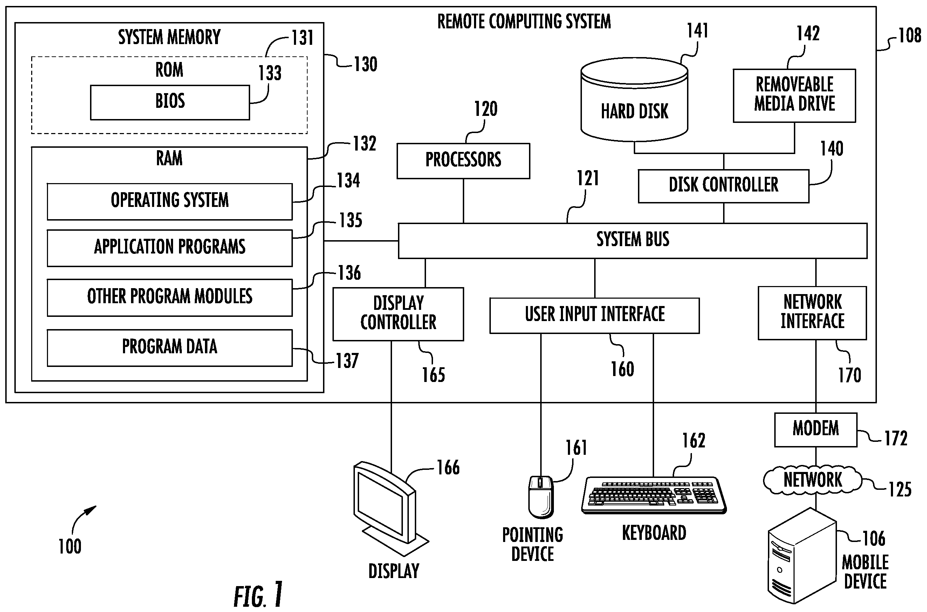

Figure 1 is a system diagram of an example of a computing environment 100 in communication with a network. In some instances, the computing environment 100 is incorporated in a public cloud computing platform (such as Amazon Web Services or Microsoft Azure), a hybrid cloud computing platform (such as HP Enterprise OneSphere) or a private cloud computing platform. As shown in Figure 1, computing environment 100 includes remote computing system 108 (hereinafter computer system), which is one example of a computing system upon which embodiments described herein may be implemented.

The remote computing system 108 may, via processors 120, which may include one or more processors, perform various functions. The functions may be broadly described as those governed by machine learning techniques. Generally, any problems that can be solved within a computer system. As described in more detail below, the remote computing system 108 may be used to provide (e.g., via display 266) users with a dashboard of information, such that such information may enable users to identify and prioritize models and data as being more critical to the solution than others.

As shown in Figure 1, the computer system 110 may include a communication mechanism such as a bus 121 or other communication mechanism for communicating information within the computer system 110. The computer system 110 further includes one or more processors 120 coupled with the bus 121 for processing the information. The processors 120 may include one or more CPUs, GPUs, or any other processor known in the art.

The computer system 110 also includes a system memory 130 coupled to the bus 121 for storing information and instructions to be executed by processors 120. The system memory 130 may include computer readable storage media in the form of volatile and/or nonvolatile memory, such as read only system memory (ROM) 131 and/or random-access memory (RAM) 132. System memory 130 may contain and store the knowledge within the system. The system memory RAM 132 may include other dynamic storage device(s) (e.g., dynamic RAM, static RAM, and synchronous DRAM). The system memory ROM 131 may include other static storage device(s) (e.g., programmable ROM, erasable PROM, and electrically erasable PROM). In addition, the system memory 130 may be used for storing temporary variables or other intermediate information during the execution of instructions by the processors 120. A basic input/output system 133 (BIOS) may contain routines to transfer information between elements within computer system 110, such as during start-up, that may be stored in system memory ROM 131. RAM 132 may comprise data and/or program modules that are immediately accessible to and/or presently being operated on by the processors 120. System memory 130 may additionally include, for example, operating system 134, application programs 135, other program modules 136 and program data 137.

The illustrated computer system 110 also includes a disk controller 140 coupled to the bus 121 to control one or more storage devices for storing information and instructions, such as a magnetic hard disk 141 and a removable media drive 142 (e.g., floppy disk drive, compact disc drive, tape drive, and/or solid-state drive). The storage devices may be added to the computer system 110 using an appropriate device interface (e.g., a small computer system interface (SCSI), integrated device electronics (IDE), Universal Serial Bus (USB), or FireWire).

The computer system 110 may also include a display controller 165 coupled to the bus 121 to control a monitor or display 166, such as a cathode ray tube (CRT) or liquid crystal display (LCD), for displaying information to a computer user. The illustrated computer system 110 includes a user input interface 160 and one or more input devices, such as a keyboard 162 and a pointing device 161, for interacting with a computer user and providing information to the processor 120. The pointing device 161, for example, may be a mouse, a trackball, or a pointing stick for communicating direction information and command selections to the processor 120 and for controlling cursor movement on the display 166. The display 166 may provide a touch screen interface that may allow inputs to supplement or replace the communication of direction information and command selections by the pointing device 161 and/or keyboard 162.

The computer system 110 may perform a portion or each of the functions and methods described herein in response to the processors 120 executing one or more sequences of one or more instructions contained in a memory, such as the system memory 130. These instructions may include the flows of the machine learning process(es) as will be described in more detail below. Such instructions may be read into the system memory 130 from another computer readable medium, such as a hard disk 141 or a removable media drive 142. The hard disk 141 may contain one or more data stores and data files used by embodiments described herein. Data store contents and data files may be encrypted to improve security. The processors 120 may also be employed in a multi-processing arrangement to execute the one or more sequences of instructions contained in system memory 130. In alternative embodiments, hardwired circuitry may be used in place of or in combination with software instructions. Thus, embodiments are not limited to any specific combination of hardware circuitry and software.

As stated above, the computer system 110 may include at least one computer readable medium or memory for holding instructions programmed according to embodiments described herein and for containing data structures, tables, records, or other data described herein. The term computer readable medium as used herein refers to any non-transitory, tangible medium that participates in providing instructions to the processor 120 for execution. A computer readable medium may take many forms including, but not limited to, non-volatile media, volatile media, and transmission media. Non-limiting examples of non-volatile media include optical disks, solid state drives, magnetic disks, and magneto-optical disks, such as hard disk 141 or removable media drive 142. Non-limiting examples of volatile media include dynamic memory, such as system memory 130. Non-limiting examples of transmission media include coaxial cables, copper wire, and fiber optics, including the wires that make up the bus 121. Transmission media may also take the form of acoustic or light waves, such as those generated during radio wave and infrared data communications.

The computing environment 100 may further include the computer system 110 operating in a networked environment using logical connections to local computing device 106 and one or more other devices, such as a personal computer (laptop or desktop), mobile devices (e.g., patient mobile devices), a server, a router, a network PC, a peer device or other common network node, and typically includes many or all of the elements described above relative to computer system 110. When used in a networking environment, computer system 110 may include modem 172 for establishing communications over a network, such as the Internet. Modem 172 may be connected to system bus 121 via network interface 170, or via another appropriate mechanism.

Network 125, as shown in Figure 1, may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 110 and other computers (e.g., local computing device 106).

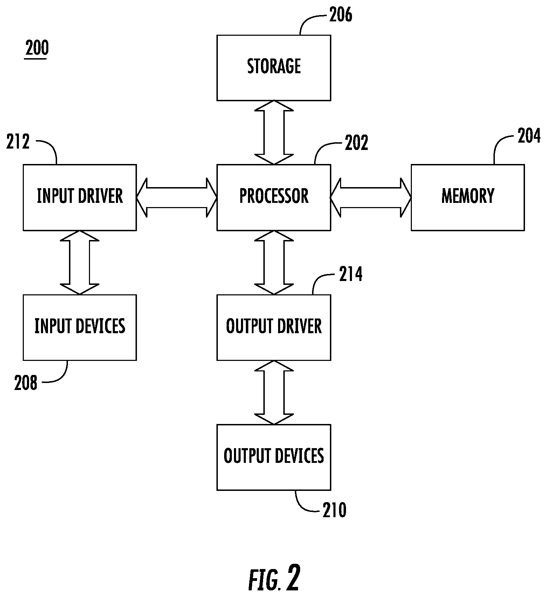

Figure 2 is a block diagram of an example device 200 in which one or more features of the disclosure can be implemented. The device 200 may be local computing device 106, for example. The device 200 can include, for example, a computer, a gaming device, a handheld device, a set-top box, a television, a mobile phone, or a tablet computer. The device 200 includes a processor 202, a memory 204, a storage device 206, one or more input devices 208, and one or more output devices 210. The device 200 can also optionally include an input driver 212 and an output driver 214. It is understood that the device 200 can include additional components not shown in Figure 2 including an artificial intelligence accelerator.

In various alternatives, the processor 202 includes a central processing unit (CPU), a graphics processing unit (GPU), a CPU and GPU located on the same die, or one or more processor cores, wherein each processor core can be a CPU or a GPU. In various alternatives, the memory 204 is located on the same die as the processor 202, or is located separately from the processor 202. The memory 204 includes a volatile or non-volatile memory, for example, random access memory (RAM), dynamic RAM, or a cache.

The storage device 206 includes a fixed or removable storage means, for example, a hard disk drive, a solid-state drive, an optical disk, or a flash drive. The input devices 208 include, without limitation, a keyboard, a keypad, a touch screen, a touch pad, a detector, a microphone, an accelerometer, a gyroscope, a biometric scanner, or a network connection (e.g., a wireless local area network card for transmission and/or reception of wireless IEEE 802 signals). The output devices 210 include, without limitation, a display, a speaker, a printer, a haptic feedback device, one or more lights, an antenna, or a network connection (e.g., a wireless local area network card for transmission and/or reception of wireless IEEE 802 signals).

The input driver 212 communicates with the processor 202 and the input devices 208, and permits the processor 202 to receive input from the input devices 208. The output driver 214 communicates with the processor 202 and the output devices 210, and permits the processor 202 to send output to the output devices 210. It is noted that the input driver 212 and the output driver 214 are optional components, and that the device 200 will operate in the same manner if the input driver 212 and the output driver 214 are not present. The output driver 214 includes an accelerated processing device ("APD") 216 which is coupled to a display device 218. The APD accepts compute commands and graphics rendering commands from processor 202, processes those compute and graphics rendering commands, and provides pixel output to display device 218 for display. As described in further detail below, the APD 216 includes one or more parallel processing units to perform computations in accordance with a single-instruction-multiple-data ("SIMD") paradigm. Thus, although various functionality is described herein as being performed by or in conjunction with the APD 216, in various alternatives, the functionality described as being performed by the APD 216 is additionally or alternatively performed by other computing devices having similar capabilities that are not driven by a host processor (e.g., processor 202) and provides graphical output to a display device 218. For example, it is contemplated that any processing system that performs processing tasks in accordance with a SIMD paradigm may perform the functionality described herein. Alternatively, it is contemplated that computing systems that do not perform processing tasks in accordance with a SIMD paradigm performs the functionality described herein.

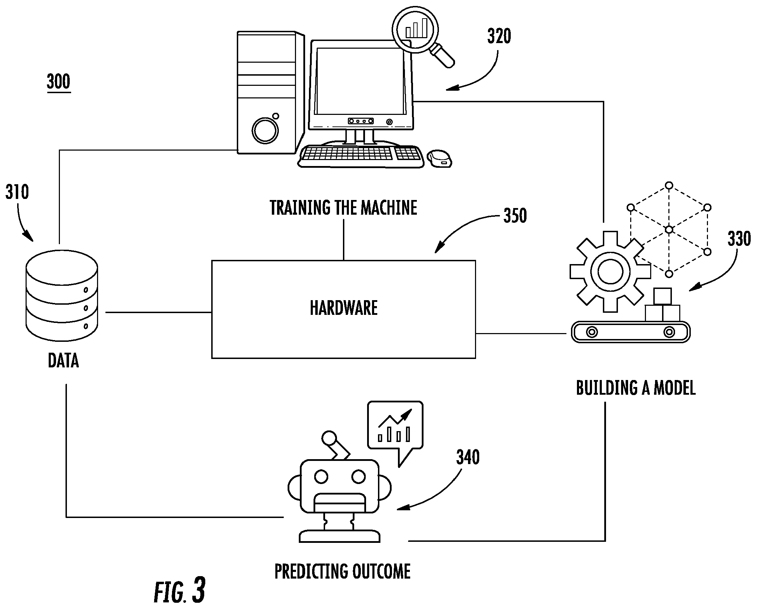

Figure 3 illustrates a graphical depiction of an artificial intelligence system 300 incorporating the example device of Figure 2. System 300 includes data 310, a machine 320, a model 330, a plurality of outcomes 340 and underlying hardware 350. System 300 operates by using the data 310 to train the machine 320 while building a model 330 to enable a plurality of outcomes 340 to be predicted. The system 300 may operate with respect to hardware 350. In such a configuration, the data 310 may be related to hardware 350 and may originate with apparatus 102, for example. For example, the data 310 may be on-going data, or output data associated with hardware 350. The machine 320 may operate as the controller or data collection associated with the hardware 350, or be associated therewith. The model 330 may be configured to model the operation of hardware 350 and model the data 310 collected from hardware 350 in order to predict the outcome achieved by hardware 350. Using the outcome 340 that is predicted, hardware 350 may be configured to provide a certain desired outcome 340 from hardware 350.

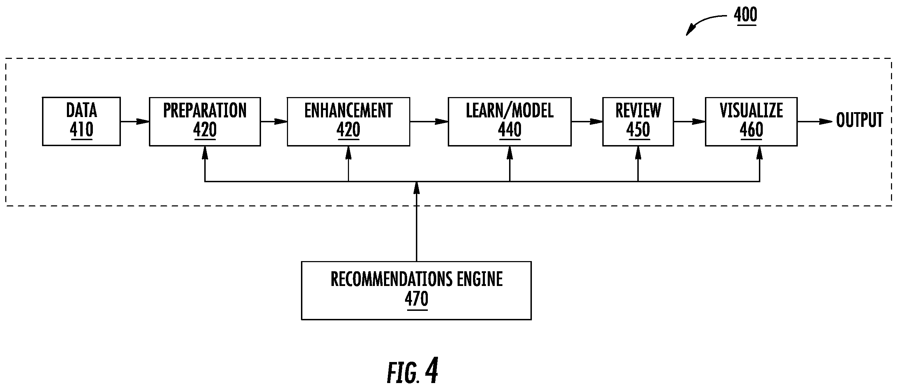

Figure 4 illustrates an exemplary workflow 400 of the present system 300 and method. Workflow 400 includes data 410 as input, preparation 420 of the data, enhancement 430 of the prepared data, a learn/model 440 process, review 450 of the result of the learning and modeling and visualize 460 of the reviewed output before outputting the result. At each of the points of data flow with the workflow 400, recommendations engine 470 may interact and provide input as is described below. As will be described in detail, workflow 400 is provided input and recommendations from recommendations engine 470 that make recommendations of techniques and configurations to use. Recommendation engine 470 is provided input and guidance from "within" by sub-systems of recommender(s) or experts and usage data arising out of the creation and execution of machine learning workflows 400.

The workflow 400 provided in Figure 4 is an exemplary workflow, and provides only an exemplary workflow associated with machine learning including examples of the stages such a workflow may contain and the order in which they may be executed in the workflow. As will be understood by those possessing an ordinary skill in the art, there are many kinds of data science workflows that are not included for brevity and that are also understood to be within the scope of the present disclosure. Generally, any set of steps designed to produce, deploy, and maintain a machine learning model may utilize and benefit from the present system and method.

Importantly, at each stage of workflow 400, a wide variety of algorithms or techniques may be applied to move towards the analytical goal. Each of these techniques may include complex configuration and deployment options, some of which may require expertise and training to achieve a desired outcome. Users with certain levels of experience may be better suited to selecting a next step and configuration to achieve the best outcome in any given context, and many iterations involving trial and error may be needed to learn what effects each option might result in. Users may improve performance and provide explanations on why particular decisions are made, what context is appropriate for them, etc., and over time these novice users develop expertise. Without the present invention, this process takes considerable time and effort, and with skilled machine learning practitioners in short supply, novice users may not have the opportunity to learn from experts. This exacerbates the impact of the current global skills shortage in the field of machine learning.

Data 410 as input includes capturing the data to input into the process and system of the present invention. Data 410 may come from the parts of system 300, for example, including the hardware 350. Preparation 420 of the data may include pre-processing and cleaning the input data; exploring the data to identify outliers, missing values and other statistical characteristics such as cardinality, collinearity, skewness, bias or class imbalance; handling missing values (imputing, ignoring, deleting records, etc.); handling outliers (removal, replacement with average or median, etc.); removing duplicate rows. Enhancement 430 of the prepared data involves techniques such as resolving class imbalance via under-sampling or over-sampling techniques, feature engineering to produce more representative and useful features. Learn/model 440 process involves; defining a prediction task; selecting appropriate features to use; choosing a suitable algorithm and evaluation metric; tuning hyperparameters; and generating training/test/validation datasets. Review 450 of the result of the learning and modeling involves; scoring trained models and generating evaluation metrics. Visualize 460 is creation of graphical depictions of the evaluation results for analysis and decision-making.

Recommendations engine 470 guides the machine learning workflow 400 by drawing from a pool of software-based recommenders that make recommendations about which techniques and configurations to use at each stage of the workflow, learned from the previous inputs and activities of human users of the system. Recommendations engine 470 may be a single multipurpose recommender or a pool of highly specialized and highly tuned recommenders, for example. Recommendations engine 470 may have the ability to interact with specific steps of workflow 400 by suggesting or enforcing changes to the pipeline within workflow 400 depending upon how the recommendations engine 470 is configured.

For example, recommendations engine 470 may enforce corporate wide standards and best practices, or suggest data cleansing steps that the recommendations engine 470 has applied frequently in the past under similar circumstances, or suggest a preferred data scaling/normalization technique to prepare data for feature extraction. The recommendations engine 470 is a versatile agent that learns from implicit and explicit input knowledge to continuously improve the quality of the recommendations and machine learning outcomes over time. The recommendations engine 470 may be able to work within any usage context. The system may also be configured to securely publish learned models 440 and recommendations to a centralized knowledge base so that a fully connected learning system across organizations and research teams within system 300 can facilitate users of the system to build upon each other's expertise and experience over time.

Recommendations engine 470 may be dependent on hardware components and implementation. For example, a multi-skilled recommender may be used. Alternatively, or additionally, a plurality of single skilled recommenders may be used including, for example, a data enhancement recommender, a problem definition recommender, a modeling practices recommender, and a visualization recommender, and so on.

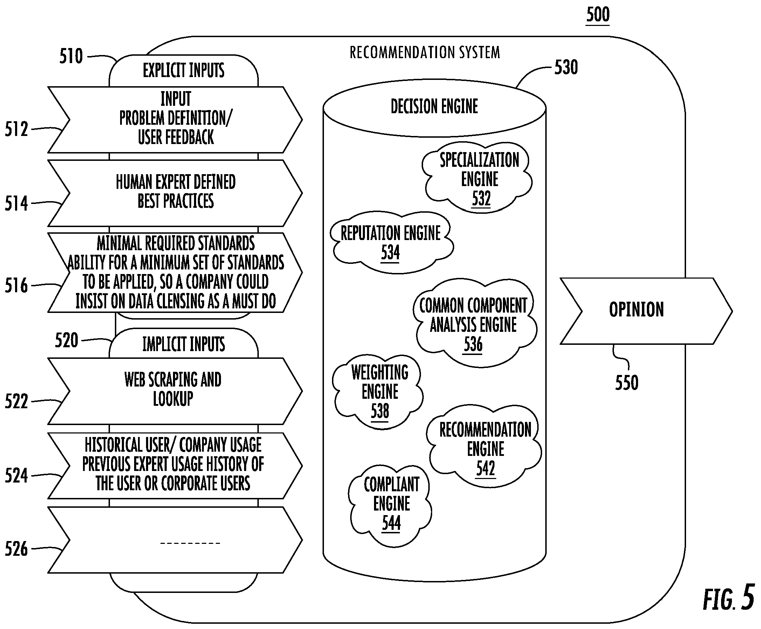

Figure 5 illustrates the elements 500 of a recommender, one of the recommendations engine 470 of Figure 4, and the knowledge and expertise designed to improve the processes in conjunction with the recommendations engine 470 of Figure 4. The recommender of the recommendation engine 470 refers to a software-based module that recommends the next step to take in building a workflow. Recommenders of recommendation engine 470 may include multi-skilled or faceted recommendations for data enhancement, problem definition, modeling, and visualization by way of example.

Generally, recommendations engine 470 includes a generic design of elements 500. For example, if a recommender specializes in one aspect of a pipeline or is a general recommender in many elements, recommendations engine 470 has the same basic construction. As is set forth above, recommendations engine 470 may provide input to all, multiple, or one of the stages of workflow 400. Recommendations engine 470 updates over time and adapts and learns based on inputs and experiences. Users of the system are guided through the analytical process at each stage, including being prompted with suggestions for different potential actions or configurations to take, along with explanations of previous instances so better-informed decisions may be made.

As shown in the elements 500 of recommendations engine 470, the recommender has two categories of input. The two inputs include explicit inputs 510 and implicit inputs 520. Each of inputs 510, 520 may have a variety of sub-categories that can be added or removed to suit the end users' (of the system) resources.

Explicit inputs 510 include inputs of facts available to the system, contributed by human users or administrators of the system. Examples of explicit inputs 510 are included below to provide the reader with an explanation and understanding of the types of elements 500 that are included as explicit inputs with the understanding that this is not a complete list but meant to provide an overview of the types of inputs that could be used. Such illustrated explicit inputs 510 include manual inputs 512, human expert defined best practices 514, and minimal required standards 516.

Manual input 512 includes inputs contributed by the end user during any stage of the workflow 400. In one embodiment, the user can define the problem and answer some questions before the pipeline is constructed and these manual inputs 512 may be used to suggest potential enhancements. The user may provide some feedback on the results of a model after examining the results that indicate that, for example, false positives are very detrimental to the company, allowing this type of input to refine the pipeline so false positives are mitigated.

Best practices 514, which may be human expert defined, for example, may include an outline of best practices based upon expertise in general terms, in a specific vertical, usage scenario or algorithm, or a bespoke model provided in the system. Such a model may leverage the knowledge of the users to resolve basic issues and fixes in the pipeline. An example of best practices 514 incudes the system noting that the data has a class imbalance on the class that the user is trying to classify. The system, guided by user input, may suggest known ways drawn from expertise provided by human experts or administrators to help combat this class imbalance issue.

Standards 516, including minimal required standards for an organization or community, for example, provides for a set of standards to be enforced on the user. Much like in software development where something like PEP-8 compliance is required before a software is committed, standards 516 provide a set of standards that are required to be followed by users. The organization or community using the system might insist that a certain level of data preparation 420 is required, or that certain types of models 440 are not to be used, for example, and this information may be provided to a user at the appropriate stage of workflow 400 or enforced automatically.

Implicit inputs 520 includes inputs implied from observing external sources of data or usage data to provide the user with a wide variety of knowledge upon which to base recommendations and decisions. Implicit inputs 520 may be constantly evolving and updating and may keep the user at the cutting edge of the field. Examples of implicit inputs 520 are described below.

Web scraping best practices and lookup from public and private databases 522 includes widespread usage of sites such as Kaggle and Stack Overflow, to enable users to seek assistance, which results in a massive amount of data and knowledge which while searchable is only truly beneficial to advanced users who have experience and are able to search for solutions effectively. Web scraping best practices or lookup from public and private databases 522 may scrape this information to extract the pertinent information and provide to the user. By way of example, the user may experience a multi-class classification problem, which the recommendations engine 470 (via one or more of the software-based recommenders it encompasses) leverages the information from the internet to determine common steps and then highlight how popular approaches may be used as compared to the end user's approach. These approaches may be provided to the user at the appropriate step in the workflow 400.

Historical user/company usage 524 uses the data generated by all the users of the system to help drive the recommendations engine 470 (via one or more of the software-based recommenders it encompasses). For example, company A may include forty users. As the users work, performing machine learning tasks, these activities can be represented as "cases" within the system and used to drive future recommendations. The usage history of the forty users may be used to help increase the skill of the newer members of the team. The top five senior users' usage stats may be used to imply the best practices in the company. Such a condition may be defined within the system as a rule and the rule may be provided to users at the appropriate stage of workflow 400. These best practices may allow workflow 400 to account for other features besides history. For example, if selecting one from a group, best practices may include other factors than those attributes that have been successful in the past. By way of example, in a non-diverse company relying on success attributes from the past may continue selection of non-diverse resumes. In order to deviate from non-desired outcomes, best practices may include accounting for diversity when hiring even if the company is currently non-diverse. Similarly, in a community released version of the software, the collected usage stats of all users may be used to enhance the pipeline at the appropriate stage of workflow 400.

Decision engine 530 receives the explicit inputs 510 and the implicit inputs 520 and may operate as the recommendations engine 470 central processor. Decision engine 530 may provide recommendations at each stage of workflow 400. Decision engine 530 may combine several data sources and techniques that are used to guide a user through the analytical processes. Decision engine 530 includes many components depending upon how general or specific it has been trained to be. In one embodiment as detailed below, a case-based reasoning approach may be adopted to make recommendations, where each stage of a machine learning workflow 400 may be represented in a standard way as a "case" with a set of features and distance metrics for the retrieval of similar cases and outcomes as the recommendations list. Case-based reasoning is just one of many techniques for making recommendations that can be employed. Several other embodiments are also listed below to highlight how this invention can use a method for making recommendations that suits the particular context or use case it is deployed to support.

For example, decision engine 530 may include any number of the following components. A component to run several pipelines to propose many efficient models to enhance the pipeline at the appropriate stage of workflow 400. A weighting engine 538 that may use hardcoded best practices to suggest appropriate steps or actions to take to enhance the pipeline at the appropriate stage of workflow 400. A reputation engine 534 that may leverage crowdsourced knowledge base to drive suggestions, and that may leverage the prior history of all previous users to guide the suggestion process to enhance the pipeline at the appropriate stage of workflow 400. The reputation engine 534 that may over time capture the expertise and performance of each user on different topics, machine learning tasks and pipeline stages. Users may have an overall reputation score and individual reputation scores for different stages and types of machine learning process (e.g., deep learning, classification, use case-specific reputation, etc.) which can be used to enhance the pipeline at the appropriate stage of workflow 400 by weighting recommendations with the reputation scores of the user whose historical usage they are sourced from. The common component analysis engine 536 that may use the previously known solution(s) to problem type(s) to infer or determine the most widely used approach to a problem to enhance the pipeline at the appropriate stage of workflow 400. A compliance engine 544 that ensures minimum standards and best practices are adhered to, and quantifies to the extent to which the current context differs so that further improvements can be made.

Reputation engine 534 may provide that each user may have different levels of expertise and knowledge across machine learning techniques, problems and even industry settings. Thus, users may be more or less effective at delivering high quality results for different problems, using different algorithms, etc. The reputation engine 534 measures the ability of each user using metrics that include, but are not limited to:

Traditional data science evaluation metrics such as accuracy, precision, recall, F1 score, area under the ROC curve (AUC), cross-entropy, etc.

Business metrics that depend on the deployment context such as churn rate, conversion rate, incremental uptake / revenue, operational cost reduction, etc.

Pipeline performance metrics such as speed of execution, efficiency of each step and ability to optimize performance and evaluation metrics (measured across experiments or changes in configuration/pipeline structure).

Recommendation candidates sourced from each user may be weighted by the reputation score of that user for the particular task, technique or business problem being tackled to ensure the recommendations most likely to deliver improved performance may be recommended first.

Recommender system 542 allows learning from the previous actions of other users to enable recommendations to be made to enhance system performance to enhance the pipeline at the appropriate stage of workflow 400. Depending on the context and use case under consideration, different embodiments can employ specific recommendation methodologies to enhance the pipeline at the appropriate stage of workflow 400.

In one embodiment, a "case-based reasoning" approach to recommendation engine 542 is used. Case-based reasoning is a machine learning approach that automatically solves new problems by reusing and adapting the solutions to similar problems that have occurred in the past, and been stored in a case base. It is particularly useful technique for making recommendations in this context because past data science workflows are plentiful, they can be identified as similar to new target problems, and because a strong domain model is not required in order to adapt workflows for new problems; such domain models are typically required many other machine learning approaches but are typically lacking from data science workflows in practice. Other embodiments may apply different techniques to suit a particular context, algorithm, domain or future state of data science practice where stronger domain models exist.

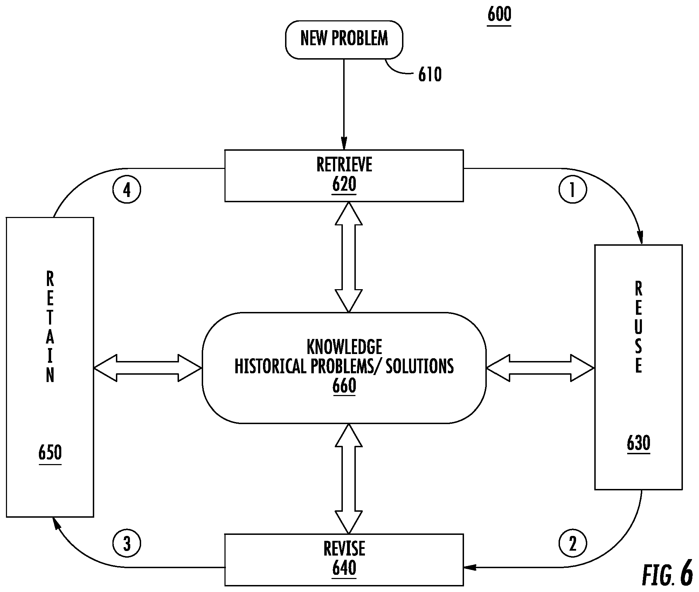

In case-based reasoning, machine learning pipelines are represented as "cases" and a number of "distance functions" are defined so that for any given case a set of similar past cases may be retrieved. The basic cycle of a case-based reasoning process is depicted in Figure 6.

Figure 6 illustrates the case-based reasoning cycle 600 used to improve the processes as described herein. Cycle 600 may include a response to a new problem 610, retrieve 620, reuse 630, revise 640 and retain 650. Retrieve 620 includes finding past cases that are most similar to the current problem. Reuse 630 includes reusing information and knowledge from previous case(s) to solve the current problem in a proposed solution. Revise 640 includes evaluating recommendations in the context of the current problem to revise the proposed solution. Retain 650 includes learning the distinctive characteristics of the current problem that resulted in the obtained output and add to the knowledge base 660 for future retrieval.

The case-based reasoning cycle 600 may use a set of distance functions to retrieve the most similar previous cases to the current problem and type of machine learning task. A selection of the most similar cases may occur, or the top n recommendations may be automatically selected and applied. Cycle 600 may tune the distance algorithm based on cases that are retrieved and selected, and also cases that are not selected, based on how the selection/not selection worked. Analyzing unselected cases that are frequently returned as recommendations can lead to a deeper understanding of the problem space and deliver improved outcomes to enhance the pipeline at the appropriate stage of workflow 400. User-based selections can also drive improvements in the algorithm, namely when users take actions outside their normal behavior.

In other embodiments, recommendations in recommendation engine 542 suitable for other contexts and use cases may be used to enhance the pipeline at the appropriate stage of workflow 400. A non-exhaustive list of such alternative embodiments is listed below but broadly speaking, any technique that can recommend the next action to take based on the current context and/or historical usage can be used.

Expert systems (including rules-based approaches) that encapsulate a body of knowledge or expertise in a particular domain may be used to enhance the pipeline at the appropriate stage of workflow 400. These expert systems can include a decision engine 530, which relies on domain knowledge encoded as rules or as a decision tree, or even an entire first-order logic that can interpret which actions are valid at any given time and which are likely to lead to a particular outcome. An expert system could be implemented in the system described by this invention where the domain of execution has a well-defined knowledge base.

Monte Carlo tree search is a method that reduces search spaces that grow exponentially by simulating the final outcome of randomly selected decisions and weighting each decision by its likelihood to produce an optimal outcome. Such a search may be used in the system described by this invention where workflows have a finite set of actions that can be taken at each step and a finite length.

A neural network may be utilized to recommend a next best action by providing representations of the current context along with historical machine learning workflows as input and allowing the system to select the best recommendation based on defined success criteria. Such an approach would be possible if a large amount of historical workflow data were available as training data.

A Q&A-style interface may be used, implemented using natural language processing (NLP) techniques, where the user of the system can define the type of action they wish to perform and specific techniques and configurations can be recommended.

It should be noted that the above embodiments can also be combined as part of this system, i.e., a Q&A interface using NLP techniques may use a neural network or search algorithm to provide the actual recommendations.

Recommendations 550 may be recommendations generated by the software system for the end user to be used to enhance the pipeline under development at the appropriate stage of workflow 400. Recommendations 550 may be set to be mandatory or discretionary depending upon how the system has been setup. If the system has company level minimum standards 516 turned on, then recommendations 550 that are linked directly to those standards 516 should be applied. The recommendations 550 may provide an explanation as to why the recommendation is being made so the end user can improve. Such explanations may also provide a benefit in choosing between multiple recommendations 550. Crowd sourced opinions may be included with expert opinions even though such opinions by definition are not based on experts, the wisdom of the crowd may well suffice if there is a large enough crowd, even though there are no experts.

Referring back to Figure 6 and the illustrated case-based reasoning cycle 600, cycle 600 has been discussed in Case-Based Reasoning: Foundational Issues, Methodological Variations, and System, A. Aamodt, E. Plaza (1994), which is incorporated by reference as if set forth herein.

A new problem 610 is solved by retrieving 620 one or more previously experienced cases, reusing 630 the case in one way or another, revising 640 the solution based on reusing a previous case, and retaining 650 the new experience by incorporating it into the existing knowledge base 660 including the input of users 470 as defined above including in Figure 5. An initial description of a problem 610 defines a new case. This new case 610 is used to retrieve 620 a case (point 1) from general knowledge 660 including the collection of previous cases. The retrieved case is combined with the new case via a reuse 630 to become a case with a solution, i.e., a proposed solution (point 2) to the initial problem. Through the revise 640 process this proposed solution is tested for success (point 3), e.g., by being applied to the real-world environment or evaluated by a user, and repaired if failed. During retain 650, useful experience from the new problem 610 or the application of the proposed solution to the new problem is retained for future reuse, and the case base is updated by a new learned case, or by modification of some existing cases (point 4).

As indicated in Figure 6, general knowledge 660 is included in cycle 600. The inclusion of general knowledge 660may range from very weak (or none) to very strong. General knowledge 660 refers to the general domain-dependent knowledge, as opposed to specific knowledge embodied by cases. For example, in diagnosing a patient by retrieving and reusing the case of a previous patient, a model of anatomy together with causal relationships between pathological states may constitute the general knowledge. A set of rules may achieve a similar result using the same role.

The present system and method can be applied to all stages of a machine learning workflow, including: data cleansing and preparation, feature engineering and selection, model training, testing and validation, results evaluation, visualization, and deployment described in Figure 4.

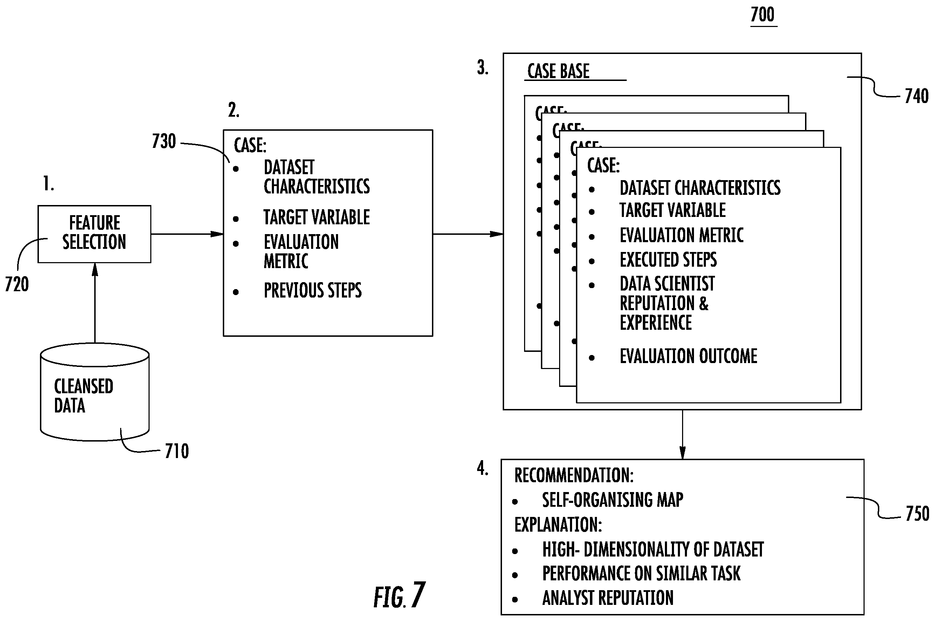

Figure 7 illustrates an example of a feature selection 700 for a recommendation of the next action in the process. In the example feature selection 700, a recommendation 750 of a suitable feature selection 710 technique is made to enhance the pipeline at the appropriate stage of workflow 400. Once the data is cleansed at 710, the technique type is defined in the feature selection at 720. At 730, the current context is represented as a case by defining dataset characteristics, target variables, evaluation metrics and previous steps, for example. At 740, the case from step 730 is submitted to the case base where distance metrics are calculated to find close matches using the dataset characteristics, target variable, evaluation metric, executed steps plus the addition of the user reputation and experience and evaluating the outcome. A recommendation is provided at 750 for a self-organizing map, along with an explanation of the reasons why it is appropriate which in this example include high-dimensionality of dataset, performance on a similar task and analyst reputation.

There are many usage scenarios where the system and method described herein may deliver enhanced value over human experts or machine learning performance alone. Human experts and machine learning algorithms each have their own strengths and weaknesses, so by combining as described the system and method produce a complementary system with improved performance and accuracy.

In one embodiment, users learn from their own experience and draw on previous machine learning tasks they have completed. This helps them to analyze their previous activities and accelerate their learning and expertise-building.

In another embodiment, the system can be deployed within an organization such as a corporation or educational institution. Here, more general use of the system means a larger knowledge base of cases will be built up and over time, a much richer and deeper understanding of the machine learning landscape will be created.

In another embodiment, the system is used by a broad community of users, de-centralized and with little or no direct connections. This "community" deployment enables much more rapid improvement in both machine learning outcomes and rapid practical education.

While each of recommendations engine 470, decision engine 530, weighting engine 538, reputation engine 534, analysis engine 536, compliance engine 544, and recommendation engine 542 are described as engines, each of these includes software and the necessary hardware to perform the functions described. For example, in computer programming, an engine is a program that performs a core or essential function for other programs. Engines are used in operating systems, subsystems or application programs to coordinate the overall operation of other programs. Each of these engines uses an algorithm to operate on data to perform a function as described. These engines each may include hardware including processor, memory and other storage devices, computer programming or instructions, as well as the other elements described in Figure 1, for example.

Although features and elements are described above in particular combinations, one of ordinary skill in the art will appreciate that each feature or element can be used alone or in any combination with the other features and elements falling within the scope of the appended claims.

In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random-access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for harnessing knowledge, expertise and previous activity to support the design and implementation of data science workflows including machine learning elements by recommending to a user processing steps, settings and configurations in order to achieve an analytical goal for at least one activity, the method comprising:
capturing input data for the at least one activity associated with a workflow;
analysing the context of the at least one activity;
searching the knowledge, expertise and previous activities for previous decisions made in previous contexts similar to the context of the at least one activity;
determining which previous users made the previous decisions;
evaluating the results of previous analysis determined by the previous decisions; modeling and learning at least one process associated with the input data;
reviewing the result of the learning and modeling to produce an output; and
providing at least one recommendation to the user, via a recommendations engine, for processing steps, settings and configurations for the at least one activity during a subsequent processing of the at least one activity based on one or more of the output, the previous decisions, the results of the previous analysis, or the previous users.

2. The method of claim 1 wherein one or more reputations of the previous users are calculated based on the evaluating the results of previous analysis determined by the previous decisions made by the previous users and the context of the previous analysis.

3. The method of claim 2, wherein the one or more reputations of the previous users weights the at least one recommendation to the user.

4. The method of any preceding claim wherein the recommendations engine includes a plurality of software-based recommenders that make recommendations about which techniques and configurations to use at each stage of the workflow.

5. The method of any preceding claim wherein the recommendations engine comprises a single multipurpose recommender or a plurality of specialized tuned recommenders.

6. The method of any preceding claim wherein the recommendations engine includes at least one of a data enhancement recommender, a problem definition recommender, a modeling practices recommender, and a visualization recommender.

7. The method of any preceding claim wherein the at least one recommendation is generated by a recommendations engine for each stage of a machine learning workflow regarding techniques and configurations to improve results.

8. The method of any preceding claim wherein the recommendations engine utilizes explicit and implicit inputs.

9. The method of claim 8 wherein the implicit inputs to the recommendations engine include one or more of decisions or actions made by previous users or are extracted from existing knowledge stores including at least machine learning communities and websites.

10. The method of claim 8 wherein the explicit inputs to the recommendations engine include at least one of manually defined problem statements, solution definitions and other user feedback.

11. The method of claim 8 wherein the explicit inputs to the recommendations engine include one or more of best practice decisions for each stage of a machine learning pipeline and different contexts or minimum standards defined within an organization or community of users.

12. The method of any preceding claim wherein the recommendation to be applied is selected by the user or automatically selected as the most appropriate.

13. The method of any preceding claim wherein a distance metric can be used to retrieve the previous contexts similar to the context of the at least on activity.

14. A system for harnessing knowledge, expertise and previous activity to support the design and implementation of data science workflows by recommending processing steps, settings and configurations in order to achieve an analytical goal for at least one activity, the system comprising:
a memory device communicatively coupled to an input/out (I/O) device, the memory device capturing input data for the at least one activity associated with a workflow; and
a processor configured to:
analyse the context of the at least one activity;
search the knowledge, expertise, and previous activities for previous decisions made in previous contexts similar to the context of the at least one activity;
determine which previous users made the previous decisions;
evaluate the results of previous analysis determined by the previous decisions;
model and learn at least one process associated with the input data;
review the result of the learning and modeling to produce an output; and
provide at least one recommendation to the user, via a recommendations engine, for processing steps, settings and configurations for the at least one activity during a subsequent processing of the at least one activity based on the output, the previous decisions, the results of the previous analysis, and the previous users.

15. The system of claim 14 wherein the recommendations engine includes a plurality of software-based recommenders that make recommendations about which techniques and configurations to use at each stage of the workflow.

## Patentansprüche

1. Verfahren zum Nutzen von Wissen, Fachkenntnissen und früheren Aktivitäten zur Unterstützung des Designs und der Implementierung von Data-Science-Workflows einschließlich Elementen maschinellen Lernens, indem einem Benutzer Verarbeitungsschritte, Einstellungen und Konfigurationen empfohlen werden, um ein analytisches Ziel für mindestens eine Aktivität zu erreichen, wobei das Verfahren umfasst:
Erfassen von Eingabedaten für die mindestens eine Aktivität, die einem Workflow zugeordnet ist;
Analysieren des Kontexts der mindestens einen Aktivität;
Durchsuchen des Wissens, der Fachkenntnisse und der früheren Aktivitäten nach früheren Entscheidungen, die in früheren Kontexten getroffen wurden, die dem Kontext der mindestens einen Aktivität ähnlich sind;
Bestimmen, welche früheren Benutzer die früheren Entscheidungen getroffen haben;
Bewerten der Ergebnisse früherer Analysen, die durch die früheren Entscheidungen bestimmt wurden; Modellieren und Lernen von mindestens einem Prozess, der mit den Eingabedaten verbunden ist;
Überprüfen des Ergebnisses des Lernens und Modellierens, um eine Ausgabe zu erzeugen; und
Bereitstellen von mindestens einer Empfehlung für Verarbeitungsschritte, Einstellungen und Konfigurationen an den Benutzer über eine Empfehlungs-Engine für die mindestens eine Aktivität während einer nachfolgenden Verarbeitung der mindestens einen Aktivität basierend auf einer oder mehreren der Ausgabe, der früheren Entscheidungen, der Ergebnisse der früheren Analysen oder der früheren Benutzer.

2. Verfahren nach Anspruch 1, wobei eine oder mehrere Reputationen der früheren Benutzer basierend auf der Bewertung der Ergebnisse früherer Analysen berechnet werden, die durch die von den früheren Benutzern getroffenen früheren Entscheidungen und den Kontext der früheren Analysen bestimmt werden.

3. Verfahren nach Anspruch 2, wobei die eine oder mehreren Reputationen der früheren Benutzer die mindestens eine Empfehlung an den Benutzer gewichten.

4. Verfahren nach einem vorhergehenden Anspruch, wobei die Empfehlungs-Engine eine Mehrzahl softwarebasierter Empfehlungsgeber beinhaltet, die Empfehlungen dazu geben, welche Techniken und Konfigurationen in jeder Phase des Workflows zu verwenden sind.

5. Verfahren nach einem vorhergehenden Anspruch, wobei die Empfehlungs-Engine einen einzelnen Mehrzweck-Empfehlungsgeber oder eine Mehrzahl spezialisierter, abgestimmter Empfehlungsgeber umfasst.

6. Verfahren nach einem vorhergehenden Anspruch, wobei die Empfehlungs-Engine mindestens einen Datenanreicherungs-Empfehlungsgeber, einen Problemdefinitions-Empfehlungsgeber, einen Modellierungspraktiken-Empfehlungsgeber und einen Visualisierungs-Empfehlungsgeber beinhaltet.

7. Verfahren nach einem vorhergehenden Anspruch, wobei die mindestens eine Empfehlung durch eine Empfehlungs-Engine für jede Phase eines maschinellen Lern-Workflows hinsichtlich Techniken und Konfigurationen zur Verbesserung der Ergebnisse erzeugt wird.

8. Verfahren nach einem vorhergehenden Anspruch, wobei die Empfehlungs-Engine explizite und implizite Eingaben nutzt.

9. Verfahren nach Anspruch 8, wobei die impliziten Eingaben in die Empfehlungs-Engine eines oder mehrere von Entscheidungen oder Handlungen umfassen, die von früheren Benutzern getroffen wurden, oder aus bestehenden Wissensspeichern extrahiert werden, einschließlich zumindest Communities und Websites zu maschinellem Lernen.

10. Verfahren nach Anspruch 8, wobei die expliziten Eingaben in die Empfehlungs-Engine mindestens eines von manuell definierten Problemstellungen, Lösungsdefinitionen und anderem Benutzerfeedback beinhalten.

11. Verfahren nach Anspruch 8, wobei die expliziten Eingaben in die Empfehlungs-Engine eines oder mehrere von Best-Practice-Entscheidungen für jede Phase einer Pipeline maschinellen Lernens und unterschiedlichen Kontexten oder Mindeststandards beinhalten, die innerhalb einer Organisation oder Gemeinschaft von Benutzern definiert sind.

12. Verfahren nach einem vorhergehenden Anspruch, wobei die anzuwendende Empfehlung vom Benutzer ausgewählt wird oder automatisch als die geeignetste ausgewählt wird.

13. Verfahren nach einem vorhergehenden Anspruch, wobei eine Distanzmetrik verwendet werden kann, um die früheren Kontexte abzurufen, die dem Kontext der mindestens einen Aktivität ähnlich sind.

14. System zur Nutzung von Wissen, Fachkenntnissen und früheren Aktivitäten zur Unterstützung des Designs und der Implementierung von Data-Science-Workflows durch Empfehlung von Verarbeitungsschritten, Einstellungen und Konfigurationen, um ein analytisches Ziel für mindestens eine Aktivität zu erreichen, wobei das System umfasst:
eine Speichereinrichtung, die kommunikativ mit einer Ein-/Ausgabe-(I/O-)Einrichtung gekoppelt ist, wobei die Speichereinrichtung Eingabedaten für die mindestens eine Aktivität erfasst, die einem Workflow zugeordnet ist; und
einen Prozessor, der dazu konfiguriert ist:
Analysieren des Kontexts der mindestens einen Aktivität;
Durchsuchen des Wissens, der Fachkenntnisse und der früheren Aktivitäten nach früheren Entscheidungen, die in früheren Kontexten getroffen wurden, die dem Kontext der mindestens einen Aktivität ähnlich sind;
Bestimmen, welche früheren Benutzer die früheren Entscheidungen getroffen haben;
Bewerten der Ergebnisse früherer Analysen, die durch die früheren Entscheidungen bestimmt wurden;
Modellieren und Lernen von mindestens einem Prozess, der mit den Eingabedaten verbunden ist;
Überprüfen des Ergebnisses des Lernens und Modellierens, um eine Ausgabe zu erzeugen; und
Bereitstellen von mindestens einer Empfehlung für Verarbeitungsschritte, Einstellungen und Konfigurationen an den Benutzer über eine Empfehlungs-Engine für die mindestens eine Aktivität während einer nachfolgenden Verarbeitung der mindestens einen Aktivität basierend auf der Ausgabe, den früheren Entscheidungen, den Ergebnissen der früheren Analysen und den früheren Benutzern.

15. System nach einem Anspruch 14, wobei die Empfehlungs-Engine eine Mehrzahl softwarebasierter Empfehlungsgeber beinhaltet, die Empfehlungen dazu geben, welche Techniken und Konfigurationen in jeder Phase des Workflows zu verwenden sind.

## Revendications

1. Procédé pour exploiter la connaissance, l'expertise et une activité précédente afin de prendre en charge la conception et la mise en œuvre de flux de travail de science des données incluant des éléments d'apprentissage machine en recommandant à un utilisateur des étapes de traitement, des réglages et des configurations afin d'atteindre un objectif analytique pour au moins une activité, le procédé comprenant :
la capture de données d'entrée pour l'au moins une activité associée à un flux de travail ;
l'analyse du contexte de l'au moins une activité ;
la recherche dans la connaissance, l'expertise et les activités précédentes de décisions précédentes prises dans des contextes précédents similaires au contexte de l'au moins une activité ;
la détermination de quels utilisateurs précédents ont pris les décisions précédentes ;
l'évaluation des résultats d'une analyse précédente déterminée par les décisions précédentes ;
la modélisation et l'apprentissage d'au moins un processus associé aux données d'entrée ;
l'examen du résultat de l'apprentissage et de la modélisation pour produire une sortie ; et
la fourniture d'au moins une recommandation à l'utilisateur, via un moteur de recommandations, pour des étapes de traitement, des réglages et des configurations pour l'au moins une activité durant un traitement ultérieur de l'au moins une activité sur la base d'une ou plusieurs de la sortie, des décisions précédentes, des résultats de l'analyse précédente, ou des utilisateurs précédents.

2. Procédé selon la revendication 1, dans lequel une ou plusieurs réputations des utilisateurs précédents sont calculées sur la base de l'évaluation des résultats d'une analyse précédente déterminée par les décisions précédentes prises par les utilisateurs précédents et du contexte de l'analyse précédente.

3. Procédé selon la revendication 2, dans lequel les une ou plusieurs réputations des utilisateurs précédents pondèrent l'au moins une recommandation à l'utilisateur.

4. Procédé selon l'une quelconque des revendications précédentes, dans lequel le moteur de recommandations inclut une pluralité de modules de recommandation basés sur un logiciel qui réalisent des recommandations concernant les techniques et les configurations à utiliser à chaque étape du flux de travail.

5. Procédé selon l'une quelconque des revendications précédentes, dans lequel le moteur de recommandations comprend un seul module de recommandation polyvalent ou une pluralité de modules de recommandation ajustés spécialisés.

6. Procédé selon l'une quelconque des revendications précédentes, dans lequel le moteur de recommandations inclut au moins l'un parmi un module de recommandation d'amélioration de données, un module de recommandation de définition de problème, un module de recommandation de pratiques de modélisation, et un module de recommandation de visualisation.

7. Procédé selon l'une quelconque des revendications précédentes, dans lequel l'au moins une recommandation est générée par un moteur de recommandations pour chaque étape d'un flux de travail d'apprentissage machine concernant des techniques et des configurations pour améliorer des résultats.

8. Procédé selon l'une quelconque des revendications précédentes, dans lequel le moteur de recommandations utilise des entrées explicites et implicites.

9. Procédé selon la revendication 8, dans lequel les entrées implicites vers le moteur de recommandations incluent une ou plusieurs de décisions ou d'actions prises par des utilisateurs précédents ou sont extraites de dépôts de connaissances existants incluant au moins des communautés et des sites Web d'apprentissage machine.

10. Procédé selon la revendication 8, dans lequel les entrées explicites vers le moteur de recommandations incluent au moins l'un parmi des énoncés de problèmes définis manuellement, des définitions de solutions et d'autres retours d'utilisateur.

11. Procédé selon la revendication 8, dans lequel les entrées explicites vers le moteur de recommandations incluent une ou plusieurs de décisions de meilleures pratiques pour chaque étape d'un pipeline d'apprentissage machine et différents contextes ou normes minimales définis au sein d'une organisation ou d'une communauté d'utilisateurs.

12. Procédé selon l'une quelconque des revendications précédentes, dans lequel la recommandation à appliquer est sélectionnée par l'utilisateur ou sélectionnée automatiquement comme étant la plus appropriée.

13. Procédé selon l'une quelconque des revendications précédentes, dans lequel une métrique de distance peut être utilisée pour récupérer les contextes précédents similaires au contexte de l'au moins une activité.

14. Système pour exploiter la connaissance, l'expertise et une activité précédente afin de prendre en charge la conception et la mise en œuvre de flux de travail de science des données en recommandant des étapes de traitement, des réglages et des configurations afin d'atteindre un objectif analytique pour au moins une activité, le système comprenant :
un dispositif de mémoire couplé de manière communicative à un dispositif d'entrée/sortie (E/S), le dispositif de mémoire capturant des données d'entrée pour l'au moins une activité associée à un flux de travail ; et
un processeur configuré pour :
analyser le contexte de l'au moins une activité ;
rechercher dans la connaissance, l'expertise, et les activités précédentes des décisions précédentes prises dans des contextes précédents similaires au contexte de l'au moins une activité ;
déterminer quels utilisateurs précédents ont pris les décisions précédentes ;
évaluer les résultats d'une analyse précédente déterminée par les décisions précédentes ;
modéliser et apprendre au moins un processus associé aux données d'entrée ;
examiner le résultat de l'apprentissage et de la modélisation pour produire une sortie ; et
fournir au moins une recommandation à l'utilisateur, via un moteur de recommandations, pour des étapes de traitement, des réglages et des configurations pour l'au moins une activité durant un traitement ultérieur de l'au moins une activité sur la base de la sortie, des décisions précédentes, des résultats de l'analyse précédente, et des utilisateurs précédents.

15. Système selon la revendication 14, dans lequel le moteur de recommandations inclut une pluralité de modules de recommandation basés sur un logiciel qui réalisent des recommandations concernant les techniques et les configurations à utiliser à chaque étape du flux de travail.
